# EUROPEAN PATENT APPLICATION

(11) **EP 2 178 299 A1**
(43) Date of publication of application: **21.04.2010**
(21) Application number: 08790174.0
(22) Date of filing: 08.07.2008
(51) Int. Cl.: H04N 7/173, G06F 17/30

(54) **INFORMATION PROCESSING SERVER, PROGRAM RECEPTION TERMINAL, PROGRAM-ASSOCIATED INFORMATION PROVIDING METHOD, AND PROGRAM-ASSOCIATED INFORMATION PLOTTING METHOD**

(30) Priority: 11.07.2007 JP 2007182668; 24.06.2008 JP 2008164413
(71) Applicant: Panasonic Corporation, Kadoma-shi Osaka 571-8501 (JP)
(72) Inventor: TSURUKURI, Emi, Osaka-shi, Osaka 540-6207 (JP); YUKI, Yasuhiro, Osaka-shi, Osaka 540-6207 (JP)
(74) Representative: Kügele, Bernhard
(86) International application number: PCT/JP2008/001822
(87) International publication number: WO 2009/008162

(57) **Abstract**

An information processing server (100), which selects and presents appropriate content when presenting, in a digital broadcast receiver, identification information of content on a network related to a certain broadcast program of interest to a user, is a server that transmits information to a program receiving terminal (101) that receives the broadcast program, and includes: a related content search unit (122) that searches out related content that is related to a broadcast program from content held by a server group (140) connected to the information processing server (100) via a network; a matching determination unit (123) that determines, from among the related content searched out by the related content search unit (122), matching content that is content having no possibility of interfering with viewing of the broadcast program; and an output unit (110) that transmits identification information for identifying the matching content, to the program receiving terminal.

## Description

### Technical Field

The present invention relates to information processing servers, information processing apparatuses, program-related information providing methods, and so on for providing, viewing, and recording content, and particularly relates to an information processing server, a program receiving terminal, a program-related information providing method, a program-related information drawing method and so on for providing, viewing, and recording content and related information thereof distributed through broadcast programs and the Internet.

### Background Art

In recent years, an electronic program guide (EPG) is used for digital television broadcasting which is rapidly becoming common, in order to allow a user to easily find out a program intended to be viewed or recorded. The EPG indicates broadcast schedules, program titles, the cast, and outlines of the program scheduled to be broadcasted. Use of this EPG allows the user to easily recognize the program intended to be viewed or recorded.

On the other hand, websites on the Internet have come to publicize information related to broadcast programs which includes, for example, program introduction, comments after viewing, cast information, and shooting location. Such information related to the broadcast programs is publicized on personal websites and message boards. In addition, such personal websites and message boards have come to provide more detailed information related to a broadcast program by using digital images or video in addition to text descriptions. As above, more users are searching, using a web browser on the PC, such information items related to the broadcast program that are provided from a perspective of someone other than program producers while concurrently viewing broadcast programs, so as to browse the information that is searched out.

Furthermore, in recent years, some digital broadcast receivers represented by a high-vision plasma television are incorporated with a web browser for browsing information on the Internet in addition to a function to receive ordinary broadcast programs. Use of such a digital broadcast receiver allows the user to browse the information on the Internet without activating the PC. For example, the user is able to browse, in the high-vision plasma television, the cast information related to the broadcast program, today's recommended program, and so on in addition to news, weather forecasts, and maps available on the Internet.

In the digital broadcast receiver, as a method for presenting information related to the broadcast program on the Internet to the user, a method such as displaying, in the digital broadcast receiver, a program-related page created by a information processing server has been disclosed (for example, see Patent Reference 1).

In the program receiving terminal, when the user selects a program slot by remote control while concurrently browsing the program guide on the activated EPG, an information providing server in Patent Reference 1 creates a program-related page that is related to the selected program. Then, the program receiving terminal activates the browser and outputs, so as to display, the program-related page created by the information providing server.
Patent Reference 1: Japanese Unexamined Patent Application Publication No.2005-102109

### Disclosure of Invention

### Problems that Invention is to Solve

Thus, the conventional information processing server and the program receiving terminal described above allow the user to browse information related to a broadcast program of interest in the digital broadcast receiver without going through troublesome operations such as activating a web browser on the PC. However, in some cases, the user becomes confused about which information to select and browse because too much information on the broadcast program is available on the Internet. In addition, there is another problem that the user misses viewing the broadcast program of interest as a result of browsing the information on the broadcast program for a long time.

The present invention is to solve the above problems, and it is an object of the present invention to provide an information processing server, a program receiving terminal and so on which can select and present appropriate information when, in the program receiving terminal, the user is provided with information on the broadcast program of interest, which is available on the Internet. In particular, the present invention aims to provide an information processing server which can solve the problem that the user, when provided with video content as information on the broadcast program, eventually misses the broadcast program of interest as a result of continuously viewing the video content even after the broadcast program of interest has started.

### Means to Solve the Problems

To achieve the object described above, the information processing server according to an aspect of the present invention is an information processing server which transmits information to a program receiving terminal which receives a broadcast program, and the information processing server includes: a related content search unit which searches out related content related to a broadcast program, from among content held by a device connected to the information processing server via a network; a matching content determination unit which determines matching content that is content having no possibility of interfering with viewing of the broadcast program, the matching content being included in the related content searched out by the related content search unit; and a transmitting unit which transmits identification information for identifying the matching content to the program receiving terminal.

With the above configuration, the information processing server can provide, from among a large volume of related content, related content which has no possibility of interfering with viewing of the program that is of interest to the user. That is, the information processing server according to an aspect of the present invention allows the user to avoid missing the broadcast program of interest as a result of continuously viewing the content even after the broadcast program of interest has started.

In addition, the program receiving terminal according to another aspect of the present invention is a program receiving terminal which draws a program guide for broadcast programs and information on a broadcast program included in the program guide, and the program receiving terminal includes: a transmitting unit which obtains the broadcast program included in the program guide, and transmits information for identifying the broadcast program that has been obtained, to an information processing server connected via a network; a receiving unit which receives identification information of matching content from the information processing server, the matching content being content related to the broadcast program and having no possibility of interfering with viewing of the broadcast program; and a drawing unit which draws a user screen for displaying the identification information of the matching content and the program guide on the same screen.

With the above configuration, the program receiving terminal can output identification information of the related content and the program guide onto the same screen, so that the user can avoid missing the broadcast program of interest.

In addition, the program-related information providing method according to another aspect of the present invention is a program-related information providing method for providing a program receiving terminal with identification information that is information for identifying content on a network, and the program-related information providing method includes: searching out related content related to a broadcast program, the related content being included in the content on the network; determining matching content that is content having no possibility of interfering with viewing of the broadcast program, from among the related content searched out in the searching out; and transmitting the identification information of the matching content to the program receiving terminal.

With this, it is possible to provide identification information of the content which has no possibility of interfering with viewing of the program that is of interest to the user, so that the user can avoid missing the broadcast program of interest as a result of continuously viewing the content even after the broadcast program of interest has started.

In addition, the program-related information drawing method according to an aspect of the present invention is a program-related information drawing method for drawing a program guide for broadcast programs and information on a broadcast program included in the program guide, and the program-related information drawing method includes: obtaining the broadcast program included in the program guide, and transmit information for identifying the broadcast program that has been obtained, to an information processing server connected via a network; receiving, when considering that content related to the broadcast program is related content, identification information of matching content from the information processing server, the matching content being the related content having no possibility of interfering with viewing of the broadcast program; and drawing a user screen for displaying the identification information of the matching content and the program guide on the same screen.

With this, it is possible to receive, from among a large volume of content, identification information of the content which has no possibility of interfering with viewing of the program that is of interest to the user, thus allowing the user to view the content related to the broadcast program without being confused about which content to browse.

Note that the present invention can also be realized as a program for causing a computer to execute the program-related information providing method and the program-related information drawing method as above.

### Effects of the Invention

According to the present invention, it is possible to determine an Internet content item which has no possibility of interfering with viewing of a broadcast program that is of interest to a user, thus making it possible to select and present appropriate information when the user is provided with the Internet content regarding the broadcast program in the program receiving terminal.

### Brief Description of Drawings

[FIG. 1] FIG. 1 is an overall block diagram of an information processing system according to a first embodiment of the present invention.
[FIG. 2] FIG. 2 is a diagram showing an example of a composition of a program guide screen in the first embodiment of the present invention.
[FIG. 3] FIG. 3 is a flowchart showing an operation of a program receiving terminal when the program guide is used in the first embodiment of the present invention.
[FIG. 4] FIG. 4 is a flowchart showing an operation of an information processing server when a matching content list is generated in the first embodiment of the present invention.
[FIG. 5] FIG. 5 is a diagram showing an example of data of program attribute information in the first embodiment of the present invention.
[FIG. 6] FIG. 6 is a diagram showing an example of data of the matching content list in the first embodiment of the present invention.
[FIG. 7] FIG. 7 is a flowchart showing operations of the information processing server and the program receiving terminal when program-related video is displayed in the first embodiment of the present invention.
[FIG. 8] FIG. 8 is a diagram showing an example of a composition of a user screen in the first embodiment of the present invention.
[FIG. 9] FIG. 9 is a diagram showing an example of a case where related content is displayed in full-screen mode in the first embodiment of the present invention.
[FIG. 10] FIG. 10 is an overall block diagram of an information processing system in a second embodiment of the present invention.
[FIG. 11] FIG. 11 is a flowchart showing an operation of an information processing server when a matching content list is generated in the second embodiment of the present invention.
[FIG. 12] FIG. 12 is a diagram showing an example of data of the matching content list in the second embodiment of the present invention.
[FIG. 13] FIG. 13 is a diagram showing an example of data of the matching content list in the second embodiment of the present invention.
[FIG. 14] FIG. 14 is a diagram showing an example of a composition of a user screen in the second embodiment of the present invention.
[FIG. 15] FIG. 15 is a flowchart showing operations of the information processing server and the program receiving terminal after the related content item is viewed in the second embodiment of the present invention.
[FIG. 16] FIG. 16 is a diagram showing an example of a composition of a user screen in the second embodiment of the present invention.
[FIG. 17] FIG. 17 is an overall block diagram of an information processing system according to a third embodiment of the present invention.
[FIG. 18] FIG. 18 (a) and (b) are diagrams showing examples of data of a matching content list in the third embodiment of the present invention.
[FIG. 19] FIG. 19 is an overall block diagram of an information processing system according to a fourth embodiment of the present invention.
[FIG. 20] FIG. 20 is an overall block diagram of an information processing system according to a fifth embodiment of the present invention.

### Numerical References

100, 210, 600, 800 Information processing server
101, 211, 450, 601, 801 Program receiving terminal
102, 212, 452, 602, 802 Output unit
103, 213, 453, 603, 803 User IF
104, 214, 454, 604, 804 Interest detection unit
105, 215, 455, 605, 805 Drawing unit
110, 220, 610, 810 Input-output unit
120, 230, 460, 620, 820 Program-related information generating unit
121, 231, 461, 621, 821 Program information management unit
122, 232, 462, 622, 822 Related content search unit
123, 233, 463, 623, 807 Matching determination unit
130, 240, 470, 830 Screen generating unit
131, 241, 471, 631, 831 Program guide generating unit
140, 250, 480, 640, 840 Server group
150, 260, 490, 850 Program information database
641 Program information server

### Best Mode for Carrying Out the Invention

Hereinafter, embodiments of the present invention will be described with reference to the drawings.

### (First Embodiment)

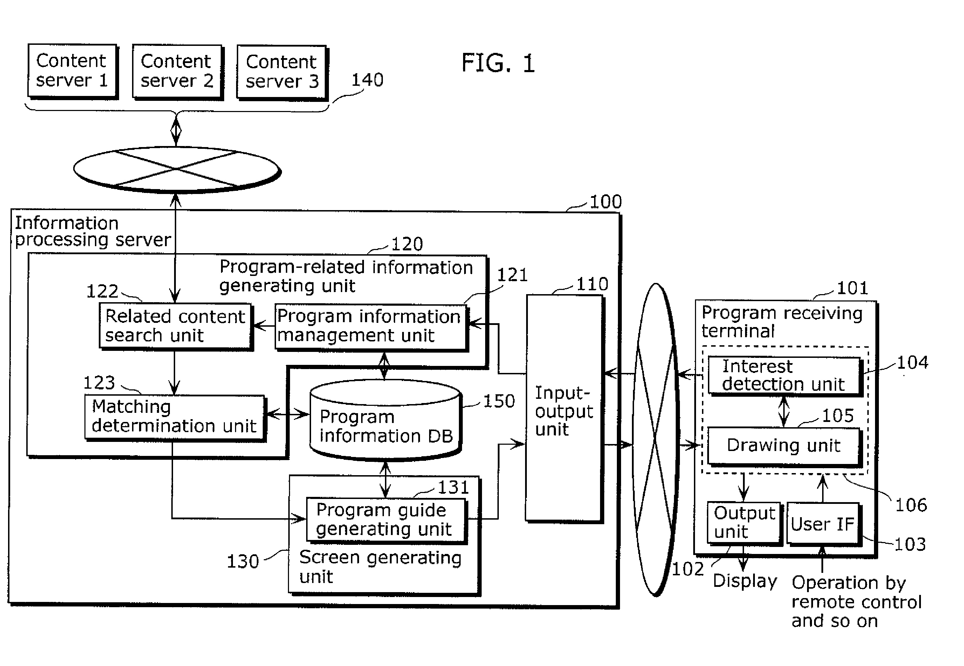

FIG. 1 is a block diagram of an information processing system according to a first embodiment of the present invention.

As FIG. 1 shows, the information processing system includes: an information processing server 100, a program receiving terminal 101, and a server group 140. In addition, the information processing server 100 and the program receiving terminal 101 are connected to each other via a communication medium such as the Internet. In addition, the information processing server 100 and the server group 140 are connected to each other via a communication medium such as the Internet. In this information processing system, when the user selects a broadcast program from the program guide displayed via the program receiving terminal 101, the information processing server 100 provides content related to the selected broadcast program. As a result, the user is able to view the content related to the selected broadcast program via the program receiving terminal 101.

Here, the program guide is a content guide represented by an EPG, and displays, for example: a program indicated with vertical and horizontal axes representing two attributes such as broadcast station and broadcast time, and broadcast time and day of the week; or programs in accordance with attributes such as viewing popularity ranking and What's New.

First, a configuration of the program receiving terminal 101 will be described. The program receiving terminal 101 is, for example, a digital broadcast receiver such as a high-vision plasma television, and includes an output unit 102, a user IF 103, an interest detection unit 104, and a drawing unit 105.

The output unit 102 displays, in a display unit, a screen which indicates a broadcast program, a program guide, video content and so on.

The user IF 103 is a module which enables remote control with a wireless television remote controller or the like using infrared rays (IR), Bluetooth (trademark) and so on, and reports the content of the operation by the user to each constituent element. Specifically, the user IF 103 enables the user to select (focus on) a program from the program guide displayed in the display unit.

Note that the television remote controller is a mere example of a user input device, and the user input device is not limited to the television remote controller. For example, the user input device may also be a mobile terminal, a game controller or the like which is equipped with a remote-control function.

The interest detection unit 104 detects the program that the user has focused on and sets the detected program as an interest program. Furthermore, the interest detection unit 104 transmits, to the information processing server 100, a program-related video request including information for identifying the interest program and also requesting provision of information on related content related to the interest program.

In other words, the interest detection unit 102, which is an example of a transmitting unit, obtains a broadcast program included in the outputted program guide and transmits, to the information processing server 100, information for identifying the broadcast program that has been obtained. Note that the interest program means a broadcast program that is of interest to the user.

The drawing unit 105 reconstructs a screen to be outputted from the output unit 102, using screen components transmitted from the information processing server 100.

In other words, the drawing unit 105, which is an example of a receiving unit, receives from the information processing server 100, identification information of matching content that is related content related to the interest program and having no possibility of interfering with viewing of the interest program. That is, the drawing unit 105 receives, as the matching content, the related content of which the viewing will be completed by a broadcast start time of the interest program. Furthermore, the drawing unit 105, which is also an example of a drawing unit, draws a user screen which displays the identification information of the matching content and the program guide are displayed on the same screen.

Here, the identification information represents information for identifying the content, and indicates information including a file name, link information, and a thumbnail image of the content.

Next, a configuration of the information processing server 100 will be described. The information processing server 100 includes: an input-output unit 110, a program-related information generating unit 120, a screen generating unit 130, and a program information database (program information DB) 150.

The input-output unit 110 accepts the program-related video request from the program receiving terminal 101, and also transmits, to the drawing unit 105 of the program receiving terminal 101, screen components which constitute information for drawing, on the same screen, the program guide and identification information of the related content at the same time.

In other words, the input-output unit 110, which is an example of a transmitting unit, transmits the screen components including identification information of the related content to the program receiving terminal 101.

The program-related information generating unit 120 includes: a program information management unit 121, a related content search unit 122, and a matching determination unit 123.

In response to the program-related video request, the program information management unit 121 obtains, from the program information database 150, a keyword that is program attribute information of the interest program.

The related content search unit 122, which is an example of a related content search unit, searches out content related to the interest program (related content), from among content held by the server group 140. Specifically, the related content search unit 122 searches, from among the content held by the server group 140 connected to the Internet, related content that is related to the interest program, using the keyword obtained by the program information management unit 121. Furthermore, the related content search unit 122 generates a related content list including identification information of the related content that has been searched out.

The matching determination unit 123 determines whether or not the related content searched out by the related content search unit 122 matches a predetermined condition.

In other words, the matching determination unit 123, which is an example of a matching content determination unit, determines, from among the related content searched out by the related content search unit 122, the matching content that is content having no possibility of interfering with viewing of the interest program. Specifically, the matching determination unit 123 determines whether or not the viewing of the related content will be completed within a period from a current time to the broadcast start time of the interest program. Then, when determining that the viewing will be completed, the matching determination unit 123 determines the related content as the matching content.

For example, when the related content is video content, the matching determination unit 123 determines that the viewing of the related content will be completed in the case where reproduction time that is the time required for reproducing the related content is shorter than the period of time from the current time to the broadcast start time of the interest program.

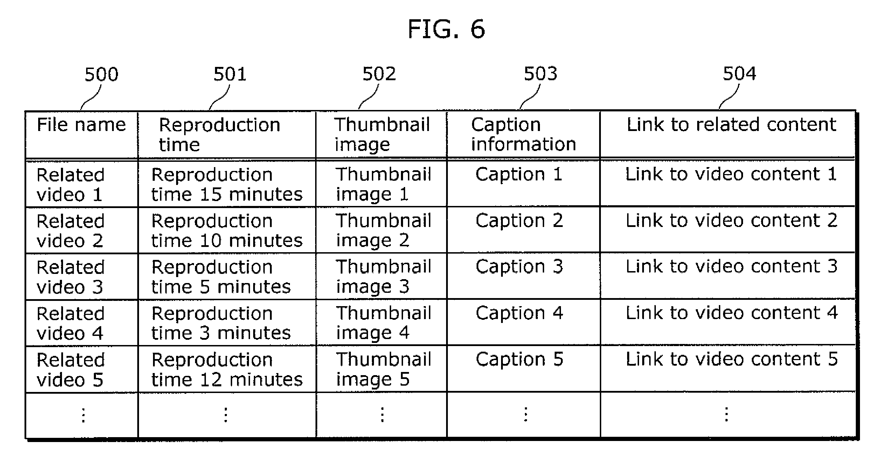

Furthermore, the matching determination unit 123, which is an example of a matching content generating unit, generates a matching content list which includes identification information of the matching content. Here, the matching content list is a list including identification information of the matching content and other associated information. Details of the matching content list will be described later with reference to FIG. 6.

The screen generating unit 130 is a processing unit that generates, in the program receiving terminal 101, screen components for displaying predetermined information in the display unit, and includes a program guide generating unit 131.

The program guide generating unit 131 generates the screen components for drawing the user screen which displays, on the same screen, the program guide and the identification information of the related content included in the matching content list. The screen components generated here include the matching content list.

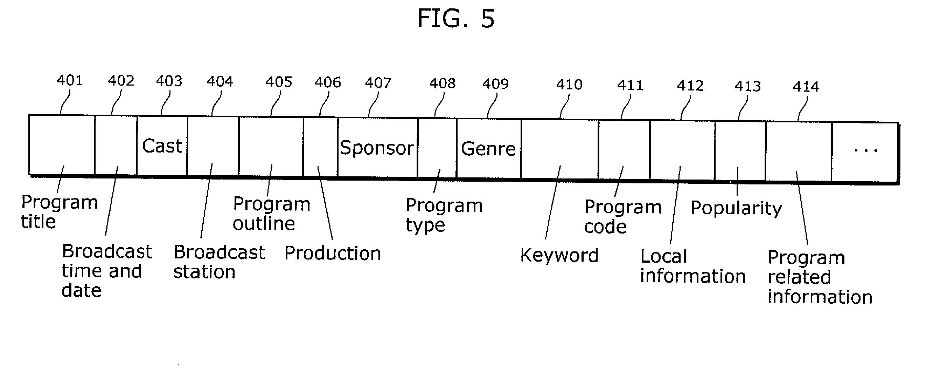

The program information database 150, which is a database stored on, for example, a storage medium, such as a memory and an HDD, holds program attribute information that is a variety of information included in the program guide. Details of the program attribute information will be described later with reference to FIG. 5.

The server group 140 is an example of a device connected to a network. Specifically, for example, the server group 140, which represents a group of content servers connected to the Internet, holds a variety of Internet content.

Part or all of the respective constituent elements included in the information processing server 100 described above are realized as a program (soft module) executable by a central processing unit (CPU) included in the information processing server 100. In practice, in the information processing server 100, the soft module which allows execution of the function of each of the input-output unit 100, the program-related information generating unit 120, and the screen generating unit 130 is stored on a storage medium such as a read only memory (ROM), an electronically erasable and programmable read only memory (EEPROM), and a hard disc drive (HDD) which make up the information processing server 100. Then, when the soft module stored on the storage medium is executed by the CPU included in the information processing server 100, the function of each of the input-output unit 110, the program-related information generating unit 120, and the screen generating unit 130 described above is realized.

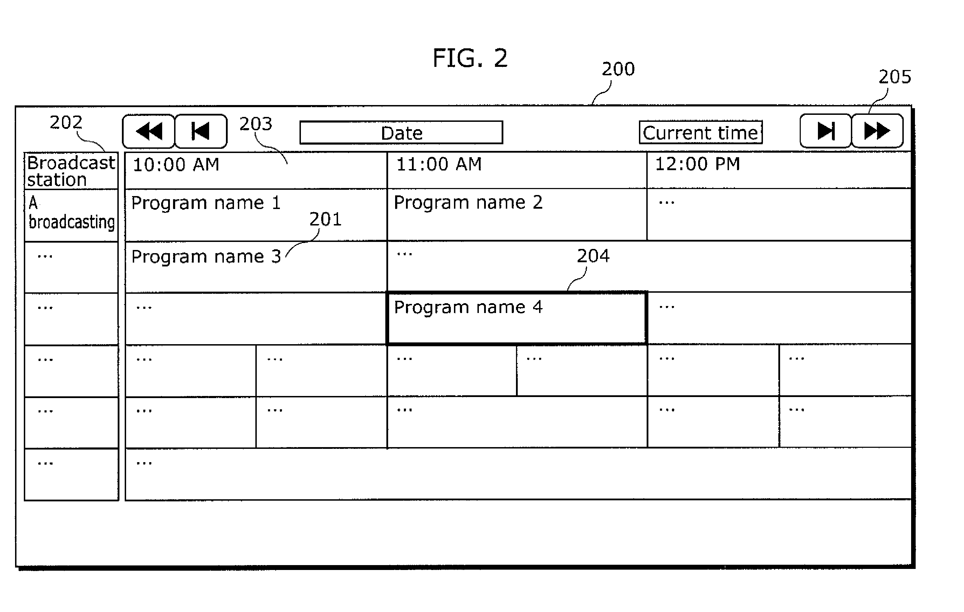

Next, the operations of the information processing server 100 and the program receiving terminal 101 in the first embodiment will be described with reference to FIGS. 2 to 8. Note that the following will describe the case where the related content is video content.

FIG. 2 is a diagram showing an example of a screen composition of a program guide 200 displayed in the output unit 102 in the program receiving terminal 101. The following will describe the case, as an example, where a user is selecting a program using a remote controller.

As FIG. 2 shows, the program guide 200 shows, in association with a broadcast station 202 and a broadcast time 203, program information 201 that is information on programs to be broadcast by each broadcast station. In other words, the program guide 200 shows: a broadcast station or a broadcast channel, a program name, a broadcast start time and a broadcast finish time of the program, the program cast, and outline information on the program.

In addition, on the program guide 200, a cursor 204 which indicates a point of interest to the user is displayed, and the cursor 204 moves on the screen according to the operation by the user. For example, when the user wants to display the next page in the program guide (for example, a broadcast program from 1:00 PM), the user moves the cursor 204 to a button 205. Then, the user can display the next page in the program guide by pressing a decision button with the cursor 204 thus moved to point to the button 205.

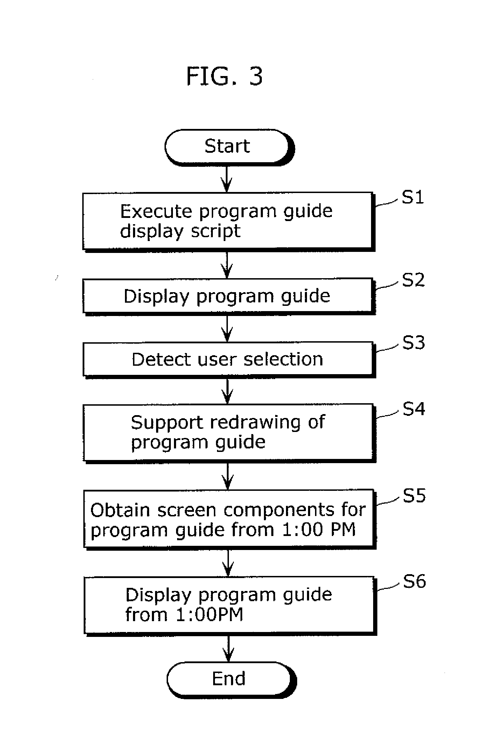

Next, the operation of the program receiving terminal 101 when the user uses the program guide 200 will be described with reference to a flowchart shown in FIG. 3.

When the user gives an instruction to display the program guide 200 via the user IF 103, the drawing unit 105 obtains screen components (for example, a script program) for displaying the program guide 200 for broadcast programs from the information processing server 100, and executes drawing with the obtained screen components (Step S1). Next, the output unit 102 displays the program guide 200 (Step S2).

Here, when the user searches for the program to view, using the program guide 200, and moves the cursor 204 on the program guide 200 by remote control, the interest detection unit 104 detects the interest program for the user and the selected function according to the position of the cursor 204 on the program guide 200 and the operation by the user (Step S3). For example, it is assumed that the user moves the cursor 204 to the button 205 and presses the decision button on the remote controller in order to display the next screen (the broadcast program from 1:00 PM). In this case, the interest detection unit 104 detects the button 205 as the function selected by the user.

Here, when the user selects the button 205, the interest detection unit 104 instructs the drawing unit 105 to redraw a program guide 200 screen (Step S4). Then, the drawing unit 105 obtains again from the information processing server, the screen components for displaying the program guide 200 from 1:00 PM (Step S5). Through such execution of drawing with the screen components obtained by the drawing unit 105, the output unit 102 then redisplays the program guide 200 (Step S6).

Next, the operation of the program receiving terminal 101 when the user selects a program displayed in the program guide 200 will be described.

When the user finds an interesting program while browsing the program guide 200, the user moves the cursor 204 by remote control to a position at which the interesting program is displayed. For example, in FIG. 2, the user becomes interested in "program name 4" and moves the cursor 204, so as to focus on the item "program name 4". Here, to "focus on" refers to a state in which the cursor is simply pointed to the position.

Next, the interest detection unit 104 in the program receiving terminal 101 detects that the user has focused on the "program name 4". Then, the interest detection unit 104 generates interest program information, using the "program name 4" in focus as the interest program. Here, the interest program information is information necessary for the information processing server 100 to identify that the user has focused on the "program name 4". Specifically, the interest program information includes, for example, a program ID which is stored in the program information database 105 in association with the program attribute information of the "program name 4".

Then, the interest detection unit 104 contains the interest program information and also transmits, to the information processing server 100, a program-related video request which requests provision of video content related to the interest program.

Next, the information processing server 100 obtains the program-related video request including the interest program information via the input-output unit 110.

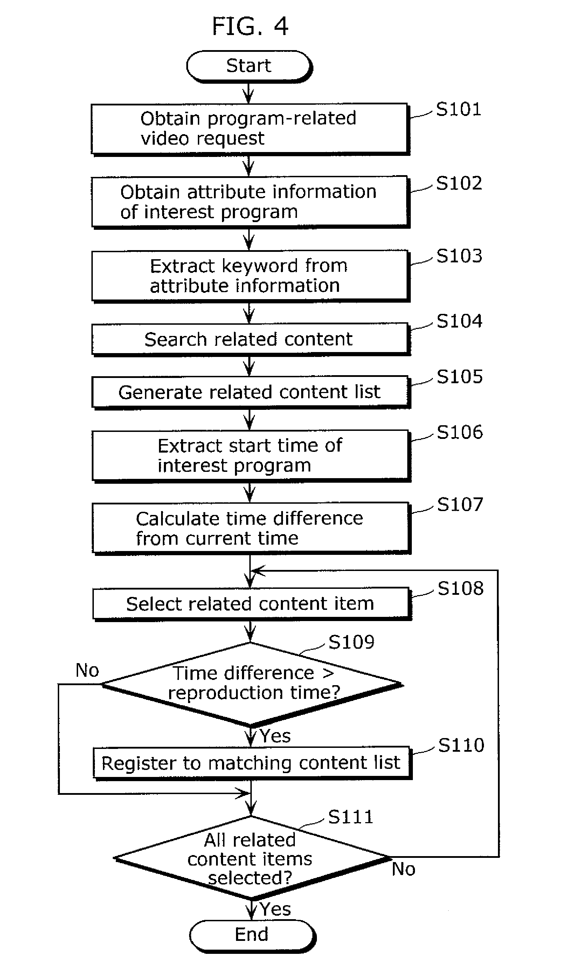

Here, the operation of the information processing server 100, from obtaining the program-related video request to generating the matching content list that can be provided to the program receiving terminal 101, will be described with reference to a flowchart shown in FIG. 4.

First, the program-related information generating unit 120 obtains the program-related video request including the interest program information which is accepted by the input-output unit 110 from the program receiving terminal 101 (Step S101). Next, the program information management unit 121 obtains, from the program information database 150, program attribute information corresponding to the interest program (for example, the "program name 4") (Step S102). Then, the program information management unit 121 extracts a keyword from the program attribute information that has been obtained (Step S103).

FIG. 5 shows an example of the program attribute information. The program attribute information includes: a program title 401 which is a component of the program guide 200 and is displayed in the program guide 200; a broadcast time and date (date, day of the week, start time, and finish time); a cast 403; a broadcast station 404 (or broadcast channel); and a program outline 405. Furthermore, the program attribute information includes a variety of information such as: production 406, sponsor 407, program type 408 (live, encore, bilingual, text, high-vision, digital, and so on), genre 409 (news, weather forecast, drama, sports, variety, and so on), keyword 410, program code 411 (G-code and so on), local information 412, popularity 413, and related program information 414 (websites and so on). When the "program name 4" is a baseball game live, for example, the program information management unit 121 extracts keywords such as "baseball" and "big play" from a variety of program attribute information as the program attribute information regarding the "program name 4".

The flowchart shown in FIG. 4 will be described again. The related content search unit 122 searches the server group 140 for the video content related to the program (related content), using the keywords extracted from the program attribute information (for example, "baseball" and "big play") as search keywords (S104). Then, the related content search unit 122 generates a related content list including identification information of the related content that has been searched out.

Next, the matching determination unit 123 extracts the start time of the program from the program attribute information (Step S106). Subsequently, the matching determination unit 123 calculates time difference between the extracted start time of the program and the current time (Step S107). In calculating the time difference, in the case where, for example, the broadcast start time of the "program name 4" is 8:00 PM and the current time at which the matching determination unit 123 extracts the start time of the program from the program attribute information is 7:40 PM, the matching determination unit 123 calculates the time difference as 20 minutes. Subsequently, the matching determination unit 123 selects one related content item that is not selected yet, from among the related content searched out in Step S104 (Step S108).

Then, the matching determination unit 123 determines whether or not the selected related content item satisfies a predetermined matching condition (Step S109). That is, the matching determination unit 123 determines whether or not the reproduction time for the related content item is shorter than the time difference calculated in Step S107 (for example, 20 minutes). Here, when the reproduction time is longer than the calculated time difference (reproduction time > calculated time difference, or reproduction time ≥ calculated time difference) (Step S109: No), the matching determination unit 123 determines that the related content item cannot be presented to the user (the related content item is not matching content) and performs processing of the following step S111.

On the other hand, when the reproduction time is shorter than the calculated time difference (reproduction time < calculated time difference, or reproduction time ≤ calculated time difference) (Step S109: Yes), the matching determination unit 123 determines that the related content item can be presented to the user (the related content item is matching content) and registers the identification information of the related content item on the matching content list (Step S110).

Then, the matching determination unit 123 determines whether or not all the related content searched out in Step S104 has been selected in Step S108 (Step S111). Here, when all the related content has not been selected (Step S111: No), the matching determination unit 123 repeats the processing starting from the selection of the related content (Steps S108 to S110). On the other hand, when all the related content has been selected (Step S111: Yes), the processing is finished.

Next, the matching content list will be described in detail with reference to FIG. 6. FIG. 6 is a diagram showing an example of the matching content list. As the figure shows, the matching content list includes: a file name 500, a reproduction time 501, a thumbnail image 502 of the related content, caption information 503, and a link 504 to the related content.

For example, a related content item, which has the file name 500 of "related movie 1" on the matching content list shown in FIG. 6, indicates that: the reproduction time 501 is "15 minutes", the thumbnail image 502 is "thumbnail image 1", the caption information 503 is "caption 1", and the link to the related content item is the "link to video content 1".

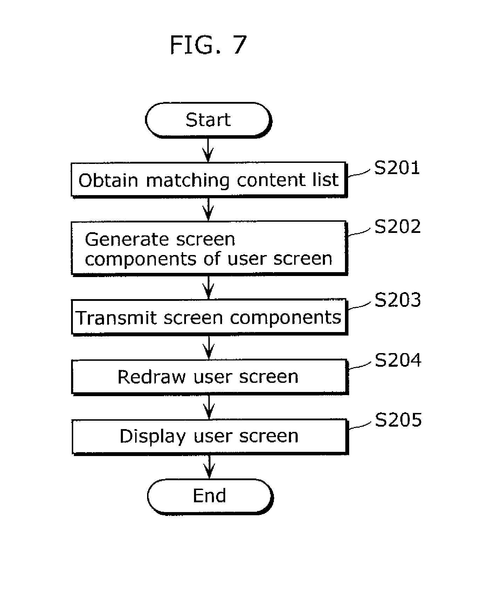

Next, an operation from when the information processing server 100 transmits the screen components to when the program receiving terminal 101 displays the user screen will be described with reference to a flowchart in FIG. 7. Here, the screen components to be transmitted are information that allows the identification information of the related content to be displayed in the program receiving terminal 101 along with the program guide. Specifically, for example, the screen components are a script program and so on.

First, the program guide generating unit 131 obtains the matching content list generated by the program-related information generating unit 120 (Step S201). Subsequently, the program guide generating unit 131 generates the screen components of the user screen in which an area for displaying identification information of the related content is provided below the program guide 200 (Step S202). Next, the program guide generating unit 131 transmits the generated screen components to the program receiving terminal 101 via the input-output unit 110 (Step S203).

The drawing unit 105 in the program receiving terminal 101 redraws the user screen, using the screen components that have been accepted (Step S204). Then, the output unit 102 displays the redrawn user screen to the user (Step S205).

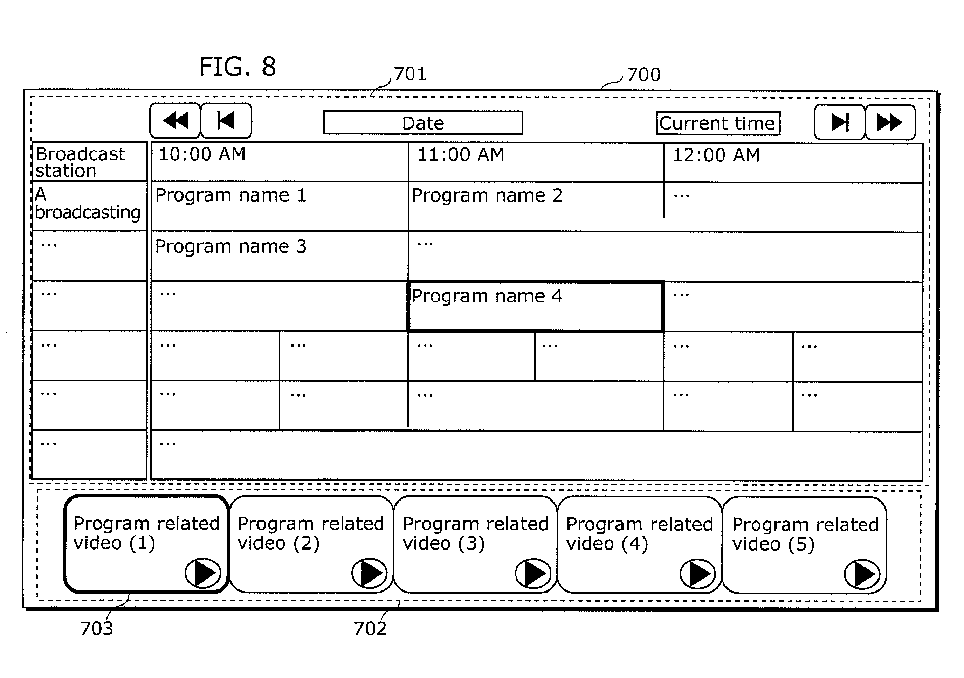

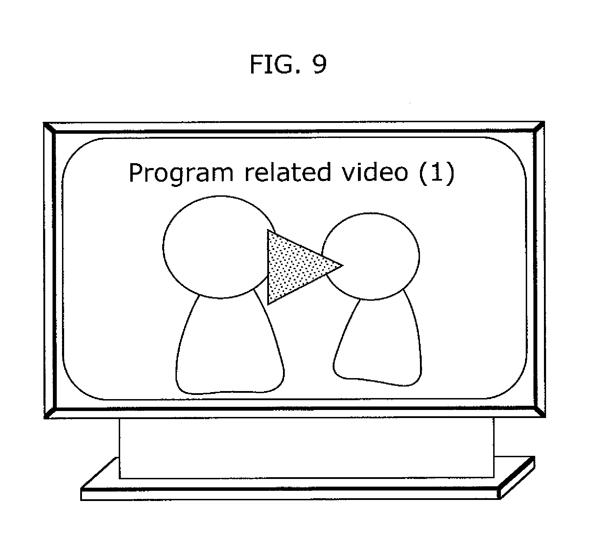

The screen displayed by the above processing (user screen) will be described with reference to FIG. 8. FIG. 8 is a diagram showing an example of a specific screen composition of a user screen 700 on which the program guide and the identification information of the related content are displayed at the same time. The user screen 700 includes a program guide 701 and a program-related video area 702 provided below the program guide. The thumbnail, which is an example of identification information of the related content, is displayed in the program-related video area 702. For example, when the user presses the decision button, focusing on the interest program "program name 4", the focus is shifted to the thumbnail 703 of the "program related video (1)". Then, when the user presses the decision button, focusing on the "program related video (1)", the drawing unit 105, which has detected the button being pressed via the user IF 103, redraws the reproduction screen for the video of the related content corresponding to the thumbnail 703 in focus. As a result, as FIG. 9 shows, for example, the user can enjoy, in full-screen display mode, the video of the "program related video (1)" which is a content item included in the related content.

Note that in the present embodiment, as FIG. 8 shows, the information processing server 100 has generated the screen components such that the program-related video area is displayed below the program guide, but the information processing server 100 may also generate, for example, the screen components such that the program-related video area is displayed above or inside the program guide, and so on. Furthermore, the information processing server 100 may also generate screen components such that not the thumbnail but the file name is displayed in the program-related video area. In other words, it is sufficient to display the information on the related content and the program guide on the same screen. In other words, the composition of the user screen in the present embodiment, which is a mere example of a composition of the user screen in an information processing system to which the present invention is applicable, provides no limitations on the user screen design.

Note that FIG. 5 shows an example of the program attribute information in the present embodiment, but the information shown in FIG. 5 is an example of information that can be included in the program guide, and the program attribute information in the present invention is not limited to the program attribute information shown in FIG. 5.

Note that in the present embodiment, the script program has been given as the screen components for drawing the user screen on which the program guide and the identification information of the related content are displayed on the same screen, but the screen components in the information processing system to which the present invention is applicable are not limited to this. For example, the screen components may also be a binary program, a HyperText Markup Language (HTML) document, and so on, and whatever screen components are applicable as long as they allow the drawing of the user screen.

Note that as a specific embodiment, the interest detection unit 104 and the drawing unit 105 enclosed by a dashed line in FIG. 1 are realized as content (or a script program) downloaded into the browser.

In addition, the configuration of the information processing server according to an aspect of the present invention is not limited to the configuration of the information processing server 100 shown in FIG. 1; the information processing server may also be configured with a plurality of server groups including, respectively, functions of the input-output unit 110, the program-related information generating unit 120, and the screen generating unit 130, and the program information database 150.

In addition, the matching determination unit 123 in the present embodiment uses the reproduction time for the video content as a predetermined matching condition in determining whether or not a viewer can complete the viewing by the broadcast start time of the interest program. However, the matching determination unit 123 may also use, in the determination, the time obtained by adding the download time for the video content to the reproduction time for the video content.

In addition, the present embodiment has been described centering on the case where the related content search unit 122 searches for the video content, but the information processing server to which the present invention is applicable is not limited to such an information processing server. For example, the related content search unit 122 may search for audio content, still image content, and so on.

As described above, according to the information processing system of the first embodiment, it is possible to provide, from among a large volume of content, content related to the broadcast program of interest to the user and has no possibility of interfering with viewing of the broadcast program. This allows the user to view the content related to the broadcast program without being confused about which content to browse. In addition, this reduces the possibility of missing the broadcast program of interest as a result of browsing information related to the broadcast program for a long time.

Furthermore, when the user views the related content by making use of an interim period until the broadcast of the interest program starts and completes viewing the related content item presented by the program receiving terminal until the last minute, the viewing will not overrun the broadcast start time of the interest program. Thus, the user can comfortably enjoy viewing the related content. In addition, the user can avoid missing the interest program. Furthermore, the user can enjoy, until the last minute, viewing the related content that is provided, without interrupting the viewing of the related content for the sake of viewing the interest program.

Furthermore, the program receiving terminal can output the identification information of the related content and the program guide onto the same screen, so that the user can avoid missing the interest program.

Note that the output unit 102 included in the program receiving terminal 101 of the first embodiment may output, while the related content is being outputted, a warning at a predetermined point in time before the broadcast start time of the interest program. With this, the user can avoid missing the interest program as a result of starting viewing the related content presented, after a given period of time since the related content was first presented.

Furthermore, while the related content is being outputted, the output unit 452 included in the program receiving terminal 450 in the first embodiment of the present invention may interrupt the output of the related content so as to output the interest program, at a point in time when the broadcast of the interest program is about to start. With this, the user can avoid missing the interest program as in the case of outputting a warning.

### (Second Embodiment)

An information processing system according to a second embodiment of the present invention is different from the information processing system of the first embodiment in that the matching determination unit 233 included in the information processing server 100 of the first embodiment determines, according to a total amount of time required for viewing a plurality of related content items, the matching content that can be transmitted to the program receiving terminal. The following will describe the information processing system of the second embodiment with reference to the drawings, centering on the difference from the information processing system of the first embodiment.

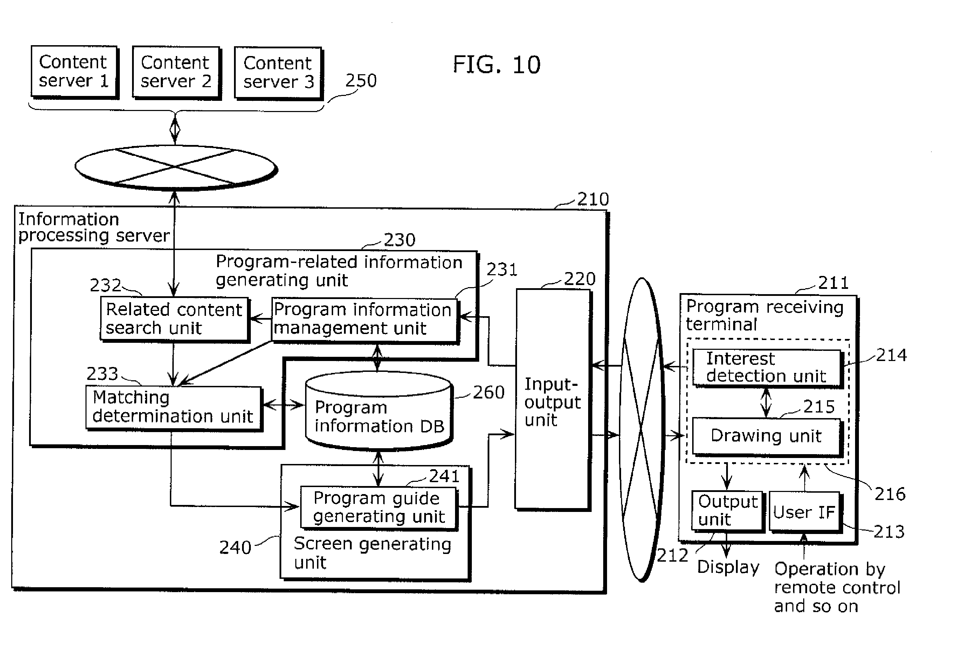

FIG. 10 is a block diagram of the information processing system in the second embodiment of the present invention.

In configurations of an information processing server 210 and a program receiving terminal 211, constituent elements except for a program-related information generating unit 230 correspond to the respective constituent elements in the information processing server 100 and the program receiving terminal 101 of the first embodiment.

Specifically, an output unit 212 corresponds to the output unit 102; a user IF 213 to the user IF 103; an interest detection unit 214 to the interest detection unit 104; a drawing unit 215 to the drawing unit 105, an input-output unit 220 to 120; a screen generating unit 240 to the screen generating unit 130; a server group 250 to the server group 140; a program information database (program information DB) 260 to the program information database 150, and each of them performs the same operation.

Thus, a description of each constituent element except for the program-related information generating unit 230 will be omitted.

The program-related information generating unit 230 includes: a program information management unit 231, a related content search unit 232, and a matching determination unit 233.

In response to the program-related video request transmitted by the program receiving terminal 211, the program information management unit 231 obtains, from the program information database 260, a keyword that is program attribute information of the interest program.

The related content search unit 232, which is an example of a related content search unit, searches out content related to the interest program (related content) from among content held by the server group 250. Specifically, the related content search unit 232 searches, from among the content held by the server group 250 connected to the Internet, the related content that is related to the interest program, using the keyword obtained by the program information management unit 231. Furthermore, the related content search unit 232 generates a related content list including identification information of the related content that has been searched out.

The matching determination unit 233 determines whether or not the related content searched out by the related content search unit 122 matches a predetermined condition.

In other words, the matching determination unit 233, which is an example of a matching content determination unit, determines, from among the related content searched out by the related content search unit 232, the matching content that is content items having no possibility of interfering with viewing of the interest program.

Specifically, the matching determination unit 233 sets a default for a matching period to a period of time from the current time to a broadcast start time of the interest program. Furthermore, the matching determination unit 233 determines whether or not the viewing of the related content items will be completed within the matching period. Here, when determining that the viewing of the related content items will be completed, the matching determination unit 233 subtracts the time required for the viewing of the related content items from the matching period. Furthermore, when determining that the viewing will be completed, the matching determination unit 233 determines the related content items as matching content.

In addition, the matching determination unit 233, which is an example of a matching content generating unit, generates a matching content list which includes identification information of the matching content.

Thus, in the case where the matching content list contains a plurality of related content items, the matching determination unit 233 determines related content items such that a total reproduction time for reproducing the plurality of related content items is not longer than a length of time until the broadcast start time of the program, in order to generate the matching content list.

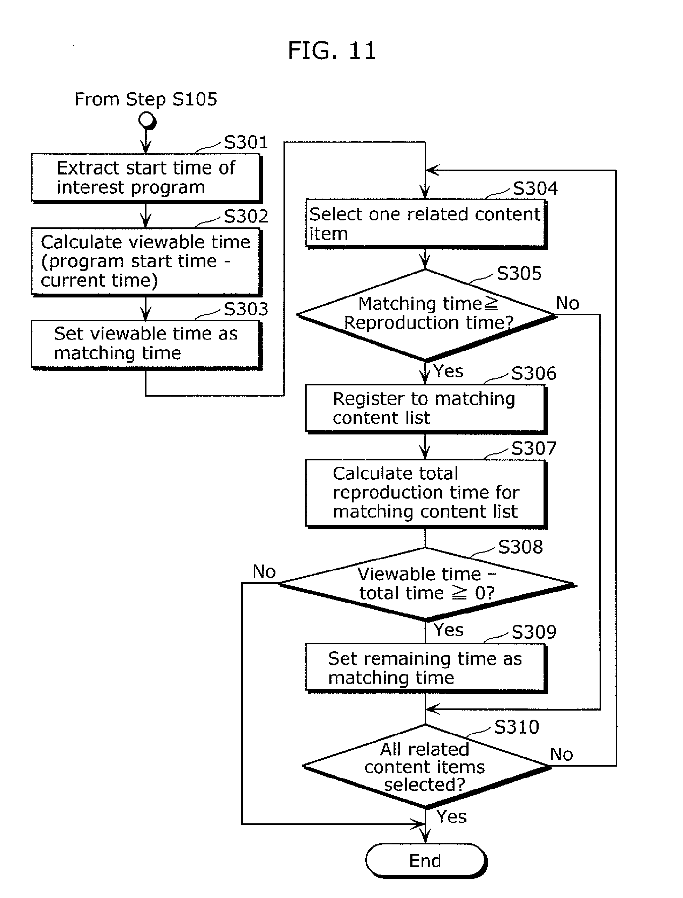

Next, the operations of the information processing server 210 and the program receiving terminal 211 in the second embodiment will be described with reference to FIGS. 11 to 13.

First, the operation of the information processing server 210 will be described with reference to the flowchart in FIG. 11. FIG. 11 is a flowchart showing an operation in which the information processing server 210: accepts the program-related video request including the related program information; generates a matching content list that can be provided to the program receiving terminal 211; and transmits the screen components for displaying a screen of the video related to the program along with the program guide.

First, the information processing server 210 performs processing from Steps S101 to S105 in FIG. 4. Next, the matching determination unit 233 extracts the program start time from the program attribute information of the interest program (Step S301). Subsequently, the matching determination unit 233 calculates difference time between the current time and the program start time as viewable time (Step S302). At this time, the viewable time satisfies: viewable time ≥ 0.

The matching determination unit 233 sets the calculated viewable time as a default for the matching period (Step S303). Subsequently, the matching determination unit 233 selects one related content item that is not selected yet, from among the related content items searched out in Step S104 (Step S304).

Then the matching determination unit 233 determines whether or not the reproduction time for the selected content item is shorter than the matching period. Here, when the reproduction time is longer than the matching period (reproduction time ≥ matching period, or reproduction time > matching period) (Step S305: No), the matching determination unit 233 determines that the related content item cannot be presented to the user (the related content item is not matching content) and performs processing of the following step S310 (Step S304).

On the other hand, when the reproduction time is shorter than the matching period (reproduction time ≤ matching period, or reproduction time < matching period) (Step S305: Yes), the matching determination unit 233 determines that the related content item can be presented to the user (the related content item is matching content) and registers the related content item on the matching content list (Step S306).

Subsequently, the matching determination unit 233 calculates the total reproduction time for reproducing all the content items registered on the matching content list (Step S307). Here, when the total reproduction time is shorter than the viewable time (Step S308: Yes), the matching determination unit 233 sets the remaining time (viewable time - total reproduction time) as the matching period (Step S309). On the other hand, when the total reproduction time is longer than the viewable time (Step S308: No), the matching determination unit 233 finishes the processing.

Then, the matching determination unit 233 determines whether or not all the related content items searched out in Step S104 have been selected in Step S304 (Step S310). Here, when all the related content items have not been selected (Step S310: No), the matching determination unit 233 repeats the processing starting from the selection of the related content items (Steps S304 to S309). On the other hand, when all the related content items have been selected (Step S310: Yes), the matching determination unit 233 finishes the processing.

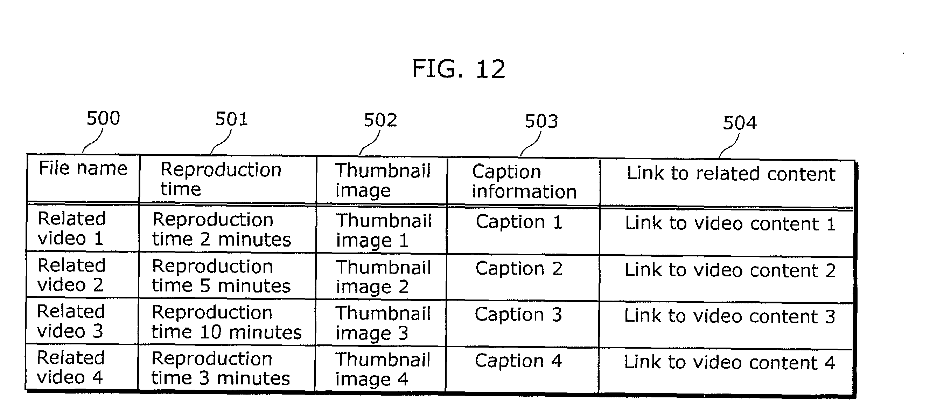

FIG. 12 is a diagram showing an example of the data of the matching content list generated by the matching determination unit 233. As FIG. 12 shows, when the viewable time is 20 minutes, the matching content list is composed of the identification information of the related content items for which the total reproduction time is within 20 minutes.

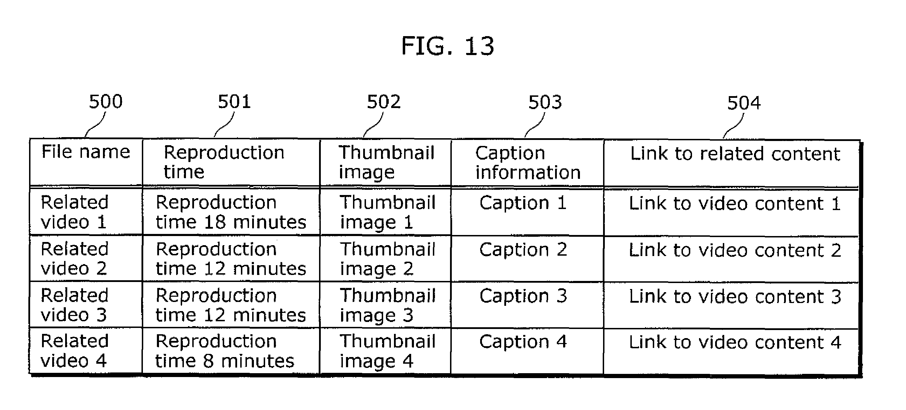

Note that the matching determination unit 233 included in the information processing server 210 according to the second embodiment may further set priority on the determined matching content so as to generate a matching content list on which identification information corresponding to the matching content is arranged according to the set priority. For example, the matching determination unit 233 makes settings such that higher priority is given to a related content item having a longer reproduction time. Then, as FIG. 13 shows, the matching determination unit 233 generates the matching content list such that the matching content which is given higher priority, that is, the identification information of the matching content having a longer reproduction time, is placed higher on the list.

The matching content list thus generated enables the program receiving terminal 211 to preferentially display the identification information of the matching content which is given higher priority.

In addition, for example, the matching determination unit 233 may also make settings such that higher priority is given to the related content item having a longer reproduction time.

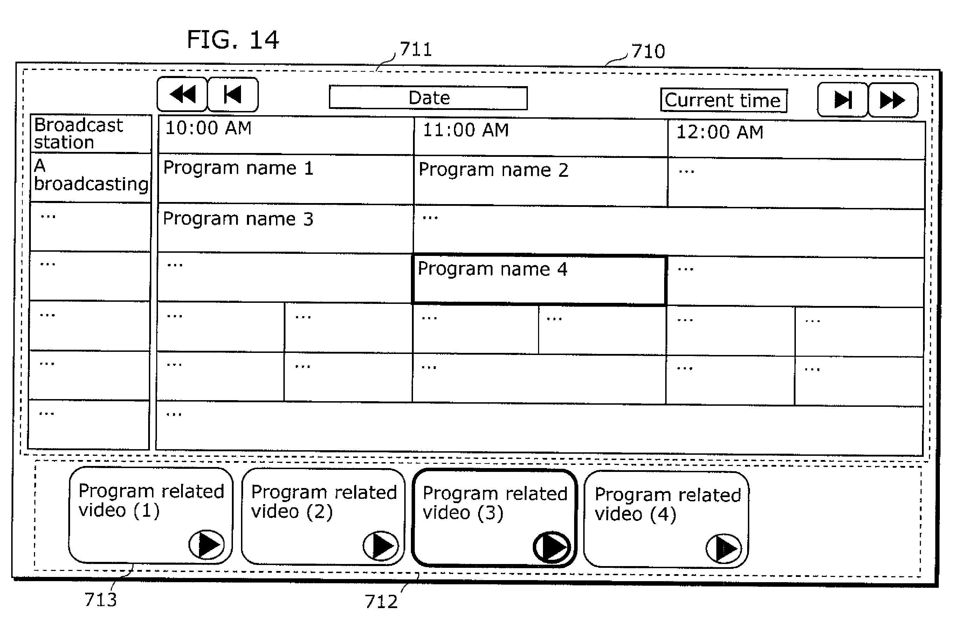

Next, operations of the information processing server 210 and the program receiving terminal 211 after the user has finished viewing the related content items in the program receiving terminal 211 will be described with reference to FIGS. 14 to 16.

The program-related information generating unit 230 included in the information processing server 210 according to the second embodiment reproduces the matching content list, when the user returns, after viewing the related content items, to the user screen on which the information on the related content items and the program guide are displayed. Specifically, the program-related information generating unit 230 recalculates the time difference between the current time and the start time of the interest program, after accepting the interest program information from the program receiving terminal 211 at the completion of the reproduction of the related content item. Then, the program-related information generating unit 230 regenerates the matching content list using the calculated time difference. Based on the matching content list thus regenerated, the program receiving terminal 211 redraws the information on the related content items displayed along with the program guide in the program-related video area.

FIG. 14 is a diagram showing an example of the user screen before the user starts viewing the related content items. The program-related information generating unit 230 generates the matching content shown in FIG. 12 according to the flowchart in FIG. 11. As a result, as FIG. 14 shows, the program guide generating unit 241 and the drawing unit 215 display a user screen 710 which includes, on the same screen, the program guide and the identification information of the related content items.

Here, the following will describe the case, as an example, where the user views "program related video (3)" which is a related content item related to the "program name 4" and having a reproduction time of 10 minutes.

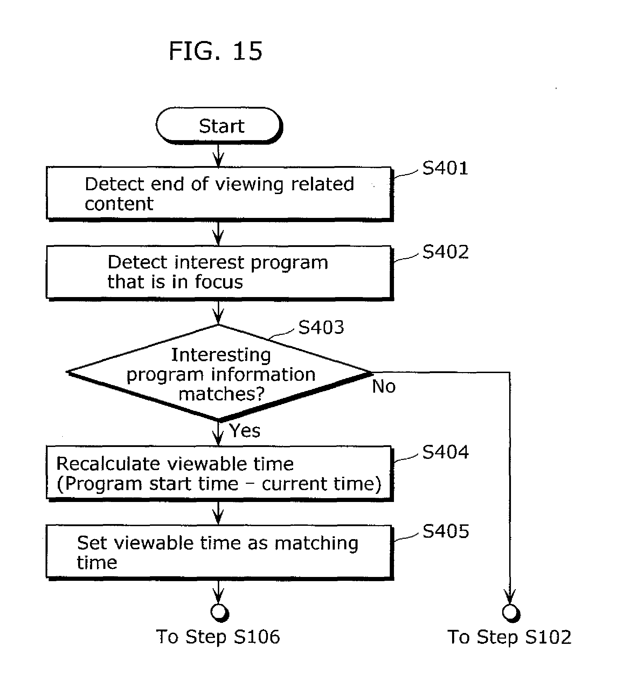

FIG. 15 is a flowchart showing operations of the information processing server 210 and the program receiving terminal 211 after the user has finished viewing the related content item in the program receiving terminal 211.

First, upon detecting the completion of the video related to the program, the drawing unit 215 in the program receiving terminal 211 redraws the user screen 710 (Step S401). On the program guide 711, the "program name 4", which the user focused on before the viewing of the related content started, is currently in focus.

Here, the interest detection unit 214 in the program receiving terminal 211 detects the "file name 4" that is the related program currently in focus, and transmits the interest program information to the information processing server 210 (Step S402).

The program information management unit 231 in the information processing server 210 verifies whether or not the obtained interest program information matches the interest program information that is currently held (Step S403). Here, when both are unmatched (Step S403: No), the information processing server 210 performs processing starting from Step S102 in FIG. 4, based on an assumption that the interest program has been changed after the viewing of the related content. On the other hand, when both are matched (Step S403: Yes), the information processing server 210 performs processing starting from Step S106 in FIG. 4 or processing starting from Step S301 in FIG. 11, based on an assumption that the related content list which has already been generated is to be used.

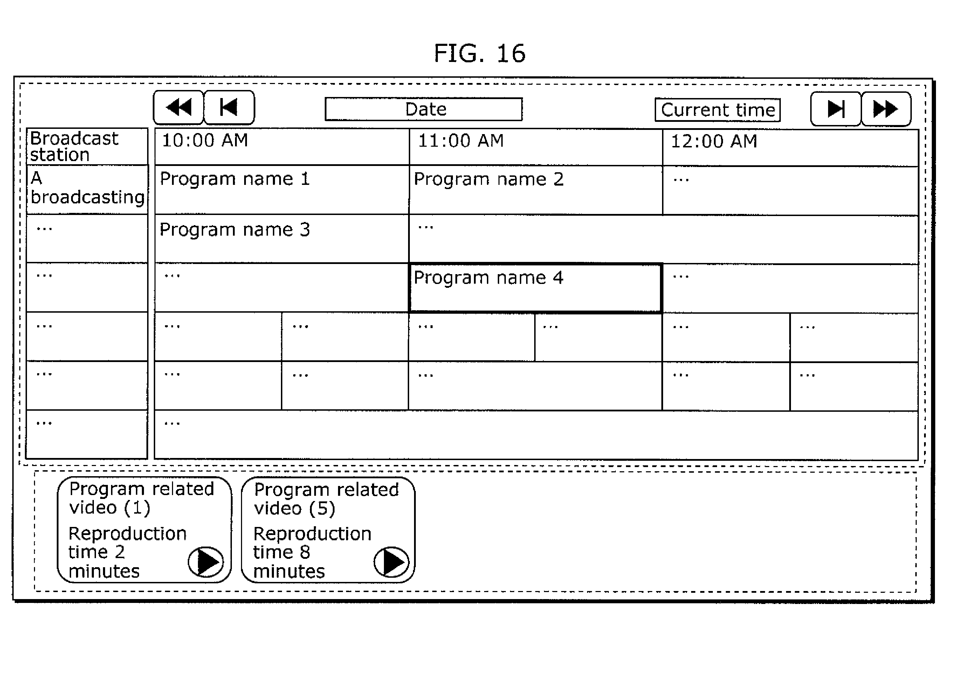

FIG. 16 is a diagram showing an example of the user screen after the user has viewed the "program related video (3)". Since there is 20 minutes before the user starts viewing the "program related video (3)", 10 minutes remains as viewable time after the user has finished viewing the "program related video (3) for which the reproduction time is 10 minutes. Thus, as FIG. 16 shows, the user screen is displayed, indicating that the total reproduction time for reproducing the matching content (related content items displayed in the program-related video area) is within 10 minutes.

As described above, according to the information processing system of the second embodiment, it is possible to present, within a maximum viewable range, a plurality of related content items having no possibility of interfering with the user's viewing the interest program.

### (Third Embodiment)

An information processing system according to a third embodiment of the present invention is configured such that a program receiving terminal 801 includes the matching determination unit that is included in the information processing server 100 of the first embodiment.

Specifically, the program receiving terminal 801, which is connected to an information processing server via a network and is a program receiving terminal which outputs a program guide for broadcast programs, includes: a transmitting unit which obtains the broadcast program included in the outputted program guide and transmits information for identifying the broadcast program to the information processing server; a receiving unit which receives identification information of related content items related to the broadcast program from the information processing server; a matching content determination unit which determines the matching content that is content having no possibility of interfering with viewing of the broadcast program from among the related content items corresponding to the identification information of the related content items that has been received by the receiving unit; and a drawing unit which draws a user screen on which the identification information of the matching content and the program guide are displayed on the same screen.

Here, the matching content determination unit includes a determination unit which determines whether or not the viewing of the related content items will be completed within a period from a predetermined time to a broadcast start time of the broadcast program, and determines the related content items as the matching content when the determination unit determines that the viewing will be completed.

The following will describe the information processing system of the third embodiment with reference to the drawings, centering on the difference from the information processing system of the first embodiment.

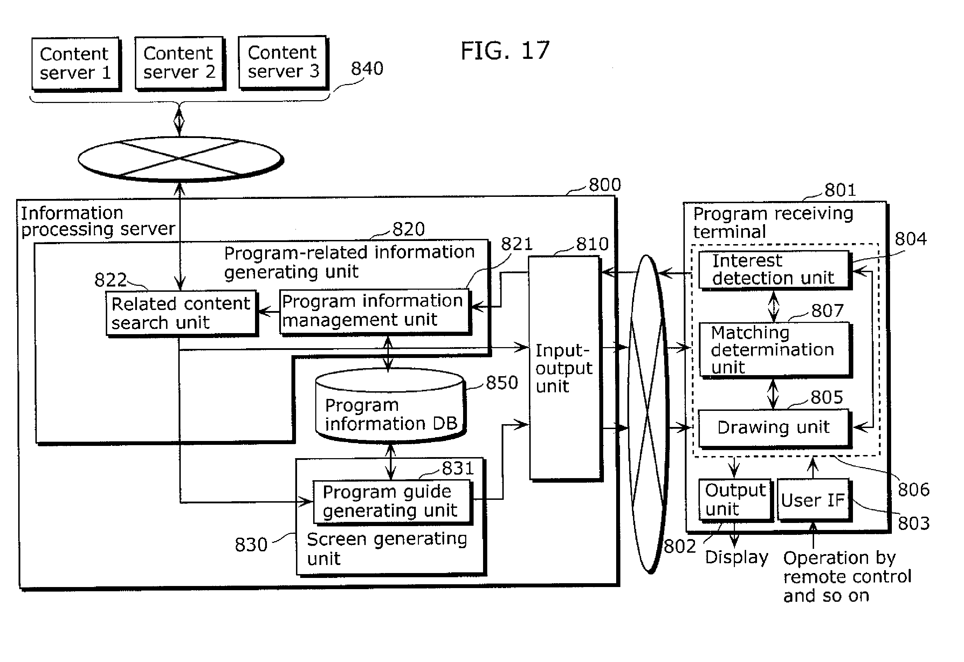

FIG. 17 is a block diagram of an information processing system according to the third embodiment of the present invention.

As FIG. 17 shows, the information processing system includes an information processing server 800, a program receiving terminal 801, and a server group 840. When a user selects a broadcast program from the program guide displayed via the program receiving terminal 801, the information processing server 800 provides video content related to the selected broadcast program. As a result, the user is able to view the video content related to the selected broadcast program via the program receiving terminal 801.

A configuration of the program receiving terminal 801 will be described. The program receiving terminal 801 includes: an output unit 802, a user IF 803, an interest detection unit 804, a drawing unit 805, and a matching determination unit 807.

The output unit 802 displays, in a display unit, a screen of a broadcast program, a program guide, video content, and so on.

The user IF 803 is a module which enables remote control with a wireless television remote controller or the like, using infrared rays (IR), Bluetooth (trademark) and so on, and enables the user to select (focus on) a program from the program guide displayed in the display unit.

The interest detection unit 804 detects the program focused by the user and sets the detected program as an interest program. Furthermore, the interest detection unit 804 transmits, to the information processing server 800, a program-related video request which includes information for identifying the interest program and requests provision of information on the related content items related to the interest program.

In other words, the interest detection unit 804, which is an example of a transmitting unit, obtains a broadcast program included in the outputted program guide and transmits, to the information processing server 800, information for identifying the broadcast program that has been obtained.

The drawing unit 805 reconstructs the user screen that is outputted from the output unit 802, using the matching content list generated by the matching determination unit 807 and screen components transmitted from the information processing server 800.

In other words, the drawing unit 805, which is an example of a receiving unit, receives, from the information processing server 800, the identification information of the related content items related to the interest program. Furthermore, the drawing unit 805, which is also an example of a drawing unit, draws the user screen on which the identification information of the matching content and the program guide are displayed at the same time.

The matching determination unit 807 obtains a related content list transmitted from the information processing server 800. Then, the matching determination unit 807 determines whether or not the related content items which correspond to the identification information included in the related content list that has been obtained match a predetermined condition. Then, the matching determination unit 807 generates a matching content list including the identification information of the related content items determined as matching.

In other words, the matching determination unit 807, which is an example of a matching content determination unit, determines, from among the related content items searched out by the related content search unit, the matching content item that is content having no possibility of interfering with viewing of the interest program. In other words, the matching determination unit 807 determines, from among the related content, the matching content that is content of which the viewing will be completed within a period of time from a current time to a broadcast start time of the interest program.

Next, the configuration of the information processing server 800 will be described. The information processing server 800 includes: an input-output unit 810, a program-related information generating unit 820, a screen generating unit 830, and a program information database (program information DB) 850.

The program-related information generating unit 820 includes a program information management unit 821 and a related content search unit 822.

The program information management unit 821 accepts a program-related video request including the interest program information via the input-output unit 810. Then, the program information management unit 821 obtains, from the program information database 850, a keyword that is program attribute information of the interest program, based on the interest program information.

The related content search unit 822 searches out video content related to the interest program, from among content held by the server group 840. Specifically, the related content search unit 822 searches, from among the content held by the server group 840 connected to the Internet, the content related to the interest program (related content), using the keyword obtained by the program information management unit 821. Furthermore, the related content search unit 822 generates a related content list including identification information of the related content that has been searched out.

The screen generating unit 830, which is a processing unit that generates screen components for drawing predetermined information on the screen in the program receiving terminal 801, includes a program guide generating unit 831.

The program guide generating unit 831 generates the screen components for drawing the user screen which concurrently displays, on the same screen, the program guide and the identification information of the related content.

The input-output unit 810 accepts the program-related video request from the program receiving terminal 801 and also transmits the screen components and the related content list to the drawing unit 805 and the matching determination unit 807 that are included in the program receiving terminal 801.

The program information database 850 holds the program attribute information that is a variety of information constituting the program guide.

Specifically, for example, the server group 840, which represents a group of content servers connected to the Internet, holds a variety of Internet content.

Part or all of the respective constituent elements included in the program receiving terminal 801 described above are realized as a program (soft module) executable by a CPU included in the program receiving terminal 801. In practice, the soft module which allows execution of each of the functions of the interest detection unit 804, the drawing unit 805, and the matching determination unit 807 is stored on a storage medium such as a ROM, an EEPROM, and an HDD which make up the program receiving terminal 801. Then, when the soft module stored on the storage medium is executed by the CPU included in the program receiving terminal 801, the function of each of the interest detection unit 804, the drawing unit 805, and the matching determination unit 807 described above is realized.

Note that as a specific embodiment, the interest detection unit 804, the drawing unit 805, and the matching determination unit 807 which are enclosed by a dashed line in FIG. 17 are realized as content (or a script program) downloaded into the browser.

Part or all of the respective constituent elements included in the information processing server 800 described above are realized as a program (soft module) executable by a CPU included in the information processing server 800. In practice, the soft module which allows execution of each of the functions of the input-output unit 810, the program-related information generating unit 820, and the screen generating unit 830 is stored on a storage medium such as a ROM, an EEPROM, and an HDD which make up the information processing server 800. Then, when the soft module stored on the storage medium is executed by the CPU included in the information processing server 800, the function of each of the input-output unit 110, the program-related information generating unit 120, and the screen generating unit 130 described above is realized. Furthermore, the program information database 850 is stored on the storage medium in the information processing server 800, such as a memory and an HDD.

These constituent elements correspond to the respective constituent elements in the information processing server 100 and the program receiving terminal 101 of the first embodiment. Specifically, the interest detection unit 804 corresponds to the interest detection unit 104; the drawing unit 805 to the drawing unit 105; the screen generating unit 830 to the screen generating unit 130; the server group 840 to the server group 140; and the program information database 850 to the program information database 150, and each of them performs the same operation.

In the third embodiment, the matching determination unit 807 which performs matching determination on the related content is included in the program receiving terminal 801. Thus, the program-related information generating unit 820 included in the information processing server 800 provides the related content list to the matching determination unit 807 included in the program receiving terminal 801 via the input-output unit 810.

In addition, the matching determination unit 807 holds the related content list thus obtained. Then, the matching determination unit 807 determines a related content item based on the related content list that is held, and generates a matching content list including the identification information of the related content item that is determined.

Specifically, as shown in the first embodiment, for example, the matching determination unit 807 determines the related content item of which the viewing can be completed within a period of time from the current time to the broadcast start time of the program, and generates the matching content list including the identification information of the related content item that has been determined.

In addition, as shown in the second embodiment, for example, the matching determination unit 807 determines a plurality of related content items of which the viewing can be completed within a period from the current time until the broadcast start time of the program, and generates the matching content list including the identification information of the plurality of related content items that have been determined. Such identification of related content items and generation of the matching content list are performed at a predetermined time interval.

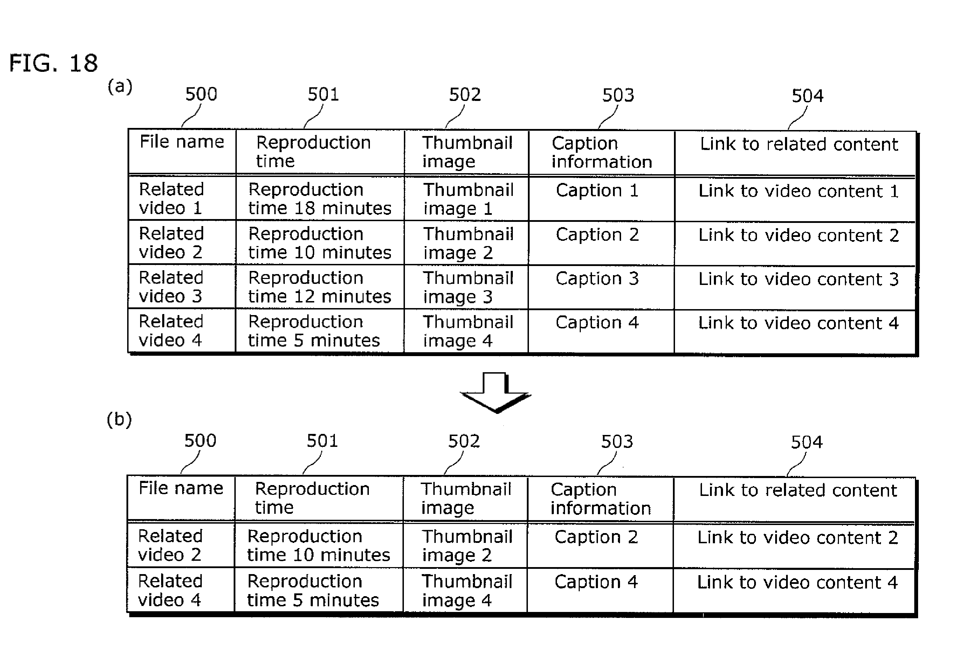

FIG. 18 is a diagram showing an example of a matching content list generated when the viewable time is 20 minutes and an example of a matching content list regenerated 10 minutes later. As FIG. 18(a) shows, related content items having a reproduction time of 20 minutes or less are listed in the matching content list generated when the viewable time is 20 minutes. However, when 10 minutes have elapsed since the generation of the matching content list shown in FIG. 18(a) for a reason that the user has left the screen alone and so on, the actual viewable time becomes 10 minutes. At this point in time, when the matching determination unit 807 regenerates the matching content list, related content items for which the reproduction time is 10 minutes or less are re-listed as shown in FIG. 18(b).

As above, according to the information processing system in the third embodiment, it is possible to present related content which has no possibility of interfering with viewing of the interest program, without causing the program receiving terminal to repeatedly transmit a request for the related content.

In addition, even if the user, when presented with the content related to the program of interest, does not immediately start viewing the related content, it is also possible to reduce the possibility that the related content currently presented will no longer meet the matching condition over time. In other words, the user can avoid missing the interest program as a result of starting viewing the related content currently presented, after a given period of time since the related content was first presented.

### (Fourth Embodiment)

An information processing system according to a fourth embodiment of the present invention is configured such that a program receiving terminal 450 includes a function that is incorporated in the information processing server 100 of the first embodiment.

The following will describe the information processing system of the fourth embodiment with reference to the drawings, centering on the difference from the information processing system of the first embodiment.

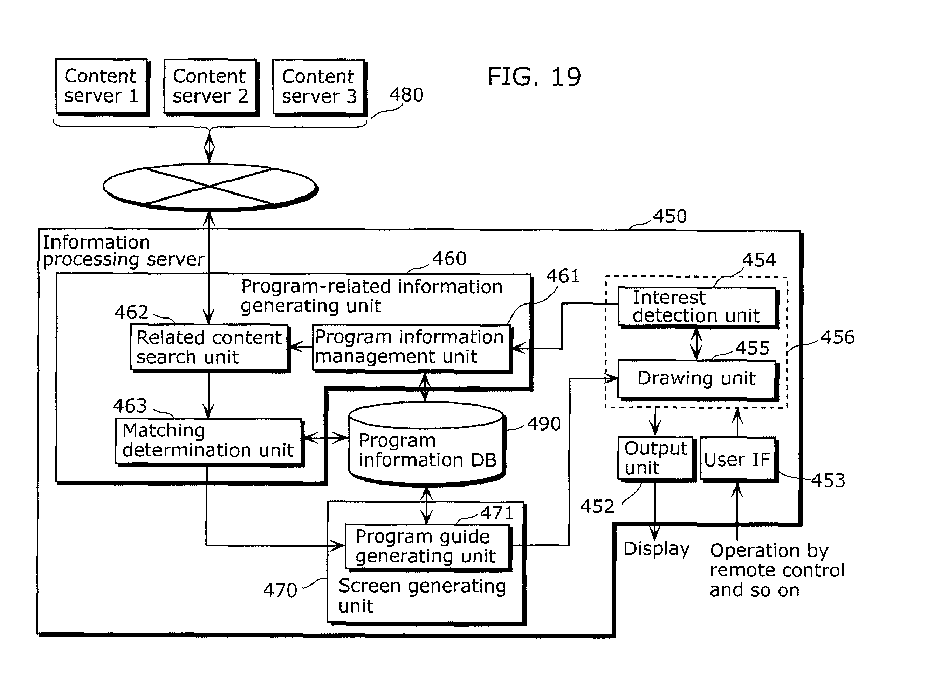

FIG. 19 is a block diagram of the information processing system according to the fourth embodiment of the present invention. In the information processing system shown in FIG. 19, when the user selects a broadcast program from the program guide displayed via the program receiving terminal 450, video content related to the selected broadcast program is provided. In other words, the user is able to view the video content related to the selected broadcast program via the program receiving terminal 450.

First, a configuration of the program receiving terminal 450 will be described. The program receiving terminal 450 includes: an output unit 452, a user IF 453, an interest detection unit 454, a drawing unit 455, a program-related information generating unit 460, a screen generating unit 470, and a program information database (program information DB) 490.

The output unit 452, the user IF 453, the interest detection unit 454, and the drawing unit 455 are the same as the output unit 102, the user IF 103, the interest detection unit 104, and the drawing unit 105 that are included in the program receiving terminal 101 of the first embodiment, and thus descriptions thereof will be omitted.

The program-related information generating unit 460 includes: a program information management unit 461, a related content search unit 462, and a matching determination unit 463.

In response to a program-related video request, the program information management unit 461 obtains, from the program information database 490, a keyword that is program attribute information of the interest program.

The related content search unit 462 searches out video content related to the interest program, from among content held by the server group 840. Specifically, the related content search unit 462 searches, from among the content held by the server group 480 connected to the Internet, the video content (related content) related to the interest program, using the keyword obtained by the program information management unit 461. Furthermore, the related content search unit 462 generates a related content list including identification information of the related content that has been searched out.

The screen generating unit 470, which is a processing unit that generates screen components for drawing predetermined information on the screen, includes a program guide generating unit 471.

The program guide generating unit 471 generates a script program for drawing a user screen on which the program guide and the information on the related content item included in the content list are displayed at the same time.

The program information database 490, which is a database stored on, for example, a storage medium such as a memory and an HDD, holds program attribute information that is a variety of information constituting the program guide.

The server group 840, which represents a group of content servers connected to the Internet, holds a variety of Internet content.

Part or all of the respective constituent elements included in the program receiving terminal 450 described above are realized as a program (soft module) executable by a central processing unit (CPU) included in the program receiving terminal 450. In practice, the soft module which allows execution of each of the functions of the interest detection unit 454, the drawing unit 455, the program-related information generating unit 460, and the screen generating unit 470 is stored on a storage medium such as a ROM, an EEPROM, and an HDD which make up the program receiving terminal 450. Then, when the soft module stored on the storage medium is executed by the CPU included in the program receiving terminal 450, the function of each of the interest detection unit 454, the drawing unit 455, and the program-related information generating unit 460, and the screen generating unit 470 described above is realized.

These constituent elements correspond to the respective constituent elements in the information processing server 100 and the program receiving terminal 101 of the first embodiment. Specifically, the interest detection unit 454 corresponds to the interest detection unit 104; the drawing unit 455 to the drawing unit 105; the program-related information generating unit 460 to the program-related information generating unit 120; the screen generating unit 470 to the screen generating unit 130; the server group 480 to the server group 140; and the program information database 490 to the program information database 150, and each of them performs the same operation.

As above, according to the information processing system of the fourth embodiment, it is possible to apply the present invention even in the case where the program guide function is locally incorporated in the program receiving terminal when presenting the related content by using the program guide. In addition, the program receiving terminal according to the fourth embodiment can provide content related to the interest program in accordance with the operation by the user, and enables the user to select content which has no possibility of interfering with viewing of the interest program.

### (Fifth Embodiment)

An information processing system according to a fifth embodiment of the present invention is configured such that a drawing unit in a program receiving terminal includes the program guide generating unit that is included in the information processing server 100 of the first embodiment. In addition, the information processing system of the fifth embodiment is different from the information processing system of the first embodiment in that the server group in the information processing system of the fifth embodiment includes a program information server.

The following will describe the information processing system of the fifth embodiment with reference to the drawings, centering on the difference from the information processing system of the first embodiment.

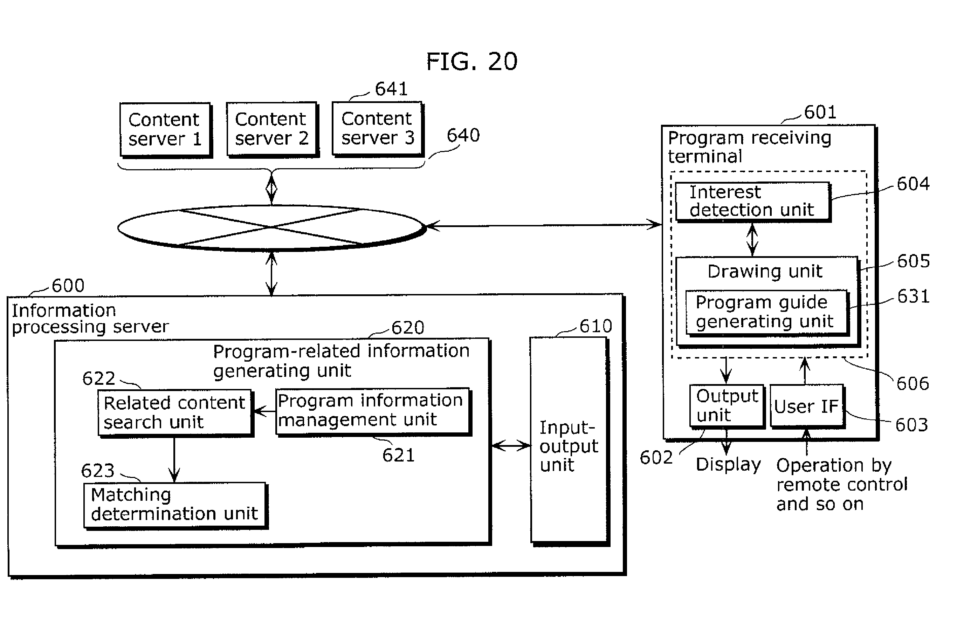

FIG. 20 is a block diagram of the information processing system in the fifth embodiment of the present invention. As FIG. 20 shows, the information processing system of the fifth embodiment includes an information processing server 600, a program receiving terminal 601, and a server group 640, which are connected to each other. In the information processing system shown in FIG. 20, when the user selects a broadcast program from a program guide displayed via the program receiving terminal 601, video content related to the selected broadcast program is provided. In other words, the user is able to view the video content related to the selected broadcast program via the program receiving terminal 601.

First, a configuration of the program receiving terminal 601 will be described. The program receiving terminal 601 includes: an output unit 602; a user IF 603 for the user to select the broadcast program on the program guide; an interest detection unit 604; a program guide generating unit 631 which executes a script program and generates screen components for drawing a user screen which includes identification information of related content; and a drawing unit 605 which reconstructs the screen outputted by the output unit 602.

The drawing unit 605, which includes a program guide generating unit 631, reconstructs the screen outputted by the output unit 602, using the screen components generated by the program guide generating unit 631.

The program guide generating unit 631 generates the screen components for drawing the user screen which displays, on the same screen, the program guide and the identification information of the related content items included in a matching content list. Specifically, the program guide generating unit 631 obtains program attribute information that is necessary for drawing the program guide, from a program information server 641 that is to be described later. Then, the program guide generating unit 631 generates the screen components for drawing the user screen, using the program attribute information that has been obtained and the matching content list transmitted from the information processing server 600.

Next, the configuration of the information processing server 600 will be described. The information processing server 600 includes an input-output unit 610 and a program-related information generating unit 620.

The program-related information generating unit 620 includes: a program information management unit 621, a related content search unit 622, and a matching determination unit 623.

The program information management unit 621 accepts a program-related video request including the interest program information via the input-output unit 610. Then, the program information management unit 621 obtains, from the program information server 641 included in the server group 640, a keyword that is program attribute information of the interest program.

The related content search unit 622 searches out video content related to the interest program from among content held by the server group 640. Specifically, the related content search unit 622 searches, from among the content held by the server group 640 connected to the Internet, related content that is related to the interest program, using the keyword obtained by the program information management unit 621. Furthermore, the related content search unit 622 generates a related content list including identification information of the related content that has been searched out.

The matching determination unit 623 determines the matching content from among the related content searched out by the related content search unit 622. Furthermore, the matching determination unit 623 generates the matching content. Specifically, the matching determination unit 623 performs the same processing as the matching determination unit 123 of the first embodiment.

The input-output unit 610 accepts a program-related video request including the interest program information from the program receiving terminal 601 and also transmits the matching content list to the drawing unit 605 in the program receiving terminal 601.

Next, the server group 640 will be described. The server group 640, which represents a group of content servers, the program information server 641, and so on connected to the Internet, holds a variety of Internet content. The program information server 641 holds a variety of program attribute information constituting the program guide.

Part or all of the respective constituent elements included in the program receiving terminal 601 described above are realized as a program (soft module) executable by a CPU included in the program receiving terminal 601. In practice, the soft module which allows execution of each of the functions of the interest detection unit 604 and the drawing unit 605 is stored on a storage medium such as a ROM, an EEPROM, and an HDD which make up the program receiving terminal 601. Then, when the soft module stored on the storage medium is executed by the CPU included in the program receiving terminal 601, the function of each of the interest detection unit 604 and the drawing unit 605 described above is realized.

Note that as a specific embodiment, the interest detection unit 604 and the drawing unit 805, and the matching determination unit 807 which are enclosed by a dashed line in FIG. 23 are realized as content (or a script program) downloaded into the browser.

In addition, part or all of the respective constituent elements included in the information processing server 600 described above are realized as a program (soft module) executable by the CPU included in the information processing server 600. In practice, the soft module which allows execution of each of the functions of the input-output unit 610 and the program-related information generating unit 620 is stored on a storage medium such as a ROM, an EEPROM, and an HDD which make up the information processing server 600. Then, when the soft module stored on the storage medium is executed by the CPU included in the information processing server 600, the function of each of the input-output unit 610 and the program-related information generating unit 620 described above is realized.

These constituent elements correspond to the respective constituent elements in the information processing server 100 and the program receiving terminal 101 of the first embodiment. Specifically, the interest detection unit 604 corresponds to the interest detection unit 104; the program-related information generating unit 620 to the program-related information generating unit 120; and the server group 640 to the server group 140, and each of them performs the same operation.

As above, according to the information processing system of the fifth embodiment, it is also possible, in presenting related content by using the program guide, to apply the present invention to the case of generating, in the program receiving terminal, the screen components for drawing the user screen which includes the identification information of the related content. In addition, the program receiving terminal according to the fifth embodiment can provide content related to the interest program according to the operation by the user, and enables the user to select, from among a large volume of related content, content which has no possibility of interfering with viewing of the interest program.

### (Variations)

Note that the present invention has been described based on the embodiments described above; however, the present invention, as a matter of course, is not limited to the above embodiments. The present invention also includes the following variations.

(1) Specifically, each of the apparatuses described above is part of a computer system including: a microprocessor, a ROM, a RAM, a hard disk unit, a display unit, a keyboard, a mouse, and so on. In the RAM or the hard disk unit, a computer program is stored. Each of the apparatuses performs its function by the microprocessor being caused to operate according to the computer program. The computer program here is configured with a combination of a plurality of instruction codes indicating instructions to the computer in order to achieve predetermined functions.

(2) Part or all of the constituent elements making up each of the above apparatuses may also be configured with a single system large scale integration (LSI). The system LSI, which is a super-multifunctional LSI manufactured by integrating constituent elements on a single chip, is specifically a computer system which includes a microprocessor, a ROM, and a RAM, and so on. In the RAM, a computer program is stored. The system LSI performs its function by the microprocessor being caused to operate according to the computer program.

(3) Part or all of the constituent elements making up each of the above apparatuses may also be configured with an IC card or a single module which is detachable to each of the apparatuses. The IC card or the module is a computer system which includes a microprocessor, a ROM, a RAM and so on. The IC card or the module may include the super-multifunctional LSI described above. The IC card or the module performs its function by the microprocessor being caused to operate according to the computer program. The IC card or the module may also have tamper resistance.

(4) The present invention may be realized as the methods described above. In addition, these methods may also be realized as a computer program which causes a computer to realize these methods, and may also be a digital signal constituting the computer program.

In addition, according to the present invention, the computer program or the digital signal may be recorded on a computer readable recording medium, such as a flexible disc, a hard disk, a CD-ROM, an MO, a DVD, a DVD-ROM, a DVD-RAM, a Blu-ray Disc (BD), and a semiconductor memory. In addition, the present invention may also be realized as the digital signal recorded on such recording media.

In addition, the present invention may also be realized as transmitting the computer program or the digital signal via a network, data broadcasting, and so on represented by a telecommunication line, wired or wireless communication links, a network represented by the Internet, data broadcasting, and so on.

In addition, the present invention may also be a computer system including a microprocessor and memory in which the computer program is stored, and the microprocessor may be caused to operate in accordance with the computer program.

In addition, the program or the digital signal may also be executed, using another independent computer system, by recording and transferring the program and the digital signal, or by transferring the program or the digital signal via the network and so on.

(5) Each of the above embodiments and the variations may be combined together.

### Industrial Applicability

The present invention can be used as an information processing server, a program receiving terminal, and so on which can provide a user with content information related to a broadcast program of interest to the user, and can particularly be used as an information processing server, a program receiving terminal, and so on which can provide the user with content information having low possibility of causing the user to miss the broadcast program of interest.

## Claims

1. An information processing server which transmits information to a program receiving terminal which receives a broadcast program, said information processing server comprising:
a related content search unit configured to search out related content related to a broadcast program, from among content held by a device connected to said information processing server via a network;
a matching content determination unit configured to determine matching content that is content having no possibility of interfering with viewing of the broadcast program, the matching content being included in the related content searched out by said related content search unit; and
a transmitting unit configured to transmit identification information for identifying the matching content to said program receiving terminal.

2. The information processing server according to Claim 1,
wherein said matching content determination unit includes a determination unit configured to determine whether or not viewing of the related content is to be completed by a start time of the broadcast program, and said matching content determination unit is configured to determine the related content as the matching content when said determination unit determines that the viewing is to be completed.

3. The information processing server according to Claim 2, further comprising
a matching content list generating unit configured to set priority on the matching content and generate a matching content list in which the identification information corresponding to the matching content is arranged in order of the set priority,
wherein said transmitting unit is configured to transmit the matching content list.

4. The information processing server according to Claim 1,
wherein said matching content determination unit includes:
a matching period setting unit configured to set a matching period for which a default is a length of time from a predetermined time to a start time of the broadcast program; and
a determination unit configured to determine whether or not the viewing of the related content is to be completed within the matching period set by said matching period setting unit, and
when said determination unit determines that the viewing is to be completed, said matching period setting unit is configured to subtract, from the matching period, a length of time required for the viewing of the related content, and said matching content determination unit is configured to set the related content as the matching content.

5. The information processing server according to Claim 4, further comprising
a matching content list generating unit configured to set priority on the matching content and generate a matching content list in which the identification information corresponding to the matching content is arranged in order of the set priority,
wherein said transmitting unit is configured to transmit the matching content list.

6. A program receiving terminal which draws a program guide for broadcast programs and information on a broadcast program included in the program guide, said program receiving terminal comprising:
a transmitting unit configured to obtain the broadcast program included in the program guide, and to transmit information for identifying the broadcast program that has been obtained, to an information processing server connected via a network;
a receiving unit configured to receive identification information of matching content from the information processing server, the matching content being content related to the broadcast program and having no possibility of interfering with viewing of the broadcast program; and
a drawing unit configured to draw a user screen for displaying the identification information of the matching content and the program guide on the same screen.

7. The program receiving terminal according to Claim 6,
wherein said receiving unit is configured to receive, as the matching content, the related content of which the viewing is to be completed by a start time of the broadcast program.

8. The program receiving terminal according to Claim 6, further comprising
an output unit configured to output a warning, while the matching content is being outputted, at a predetermined point in time before a start time of the broadcast program.

9. The program receiving terminal according to Claim 6, further comprising
an output unit configured to output, while the matching content is being outputted, the broadcast program when a start time of the broadcast program has come.

10. A program-related information providing method for providing a program receiving terminal with identification information that is information for identifying content on a network, said program-related information providing method comprising:
searching out related content related to a broadcast program, the related content being included in the content on the network;
determining matching content that is content having no possibility of interfering with viewing of the broadcast program, from among the related content searched out in said searching out; and
transmitting the identification information of the matching content to the program receiving terminal.

11. A computer program for providing a program receiving terminal with identification information for identifying content on a network, said computer program causing a computer to execute:
searching out related content related to a broadcast program, the related content being included in the content on the network;
determining matching content that is content having no possibility of interfering with viewing of the broadcast program, from among the related content searched out in the searching out; and
transmitting the identification information of the matching content to the program receiving terminal.

12. A program-related information drawing method for drawing a program guide for broadcast programs and information on a broadcast program included in the program guide, said program-related information drawing method comprising:
obtaining the broadcast program included in the program guide, and transmitting information for identifying the broadcast program that has been obtained, to an information processing server connected via a network;
receiving, when considering that content related to the broadcast program is related content, identification information of matching content from the information processing server, the matching content being the related content having no possibility of interfering with viewing of the broadcast program; and
drawing a user screen for displaying the identification information of the matching content and the program guide on the same screen.

13. A computer program for drawing a program guide for broadcast programs and information on a broadcast program included in the program guide, said computer program causing a computer to execute:
obtaining the broadcast program included in the program guide, and transmitting information for identifying the broadcast program that has been obtained, to an information processing server connected via a network;
receiving, when considering that content related to the broadcast program is related content, identification information of matching content from the information processing server, the matching content being the related content having no possibility of interfering with viewing of the broadcast program; and
drawing a user screen for displaying the identification information of the matching content and the program guide on the same screen.

## Amended claims

### Amended claims under Art. 19.1 PCT

1. (Amended) An information processing server which transmits information to a program receiving terminal which receives a broadcast program, said information processing server comprising:
a related content search unit configured to search out related content related to a broadcast program, from among content held by a device connected to said information processing server via a network;
a matching content determination unit configured to determine matching content that is content of which viewing is to be completed by a start time of the broadcast program, the matching content being included in the related content searched out by said related content search unit; and
a transmitting unit configured to transmit identification information for identifying the matching content to said program receiving terminal.

2. The information processing server according to Claim 1,
wherein said matching content determination unit includes a determination unit configured to determine whether or not viewing of the related content is to be completed by a start time of the broadcast program, and said matching content determination unit is configured to determine the related content as the matching content when said determination unit determines that the viewing is to be completed.

3. The information processing server according to Claim 2, further comprising
a matching content list generating unit configured to set priority on the matching content and generate a matching content list in which the identification information corresponding to the matching content is arranged in order of the set priority,
wherein said transmitting unit is configured to transmit the matching content list.

4. The information processing server according to Claim 1,
wherein said matching content determination unit includes:
a matching period setting unit configured to set a matching period for which a default is a length of time from a predetermined time to a start time of the broadcast program; and
a determination unit configured to determine whether or not the viewing of the related content is to be completed within the matching period set by said matching period setting unit, and
when said determination unit determines that the viewing is to be completed, said matching period setting unit is configured to subtract, from the matching period, a length of time required for the viewing of the related content, and said matching content determination unit is configured to set the related content as the matching content.

5. The information processing server according to Claim 4, further comprising
a matching content list generating unit configured to set priority on the matching content and generate a matching content list in which the identification information corresponding to the matching content is arranged in order of the set priority,
wherein said transmitting unit is configured to transmit the matching content list.

6. (Amended) A program receiving terminal which draws a program guide for broadcast programs and information on a broadcast program included in the program guide, said program receiving terminal comprising:
a transmitting unit configured to obtain the broadcast program included in the program guide, and to transmit information for identifying the broadcast program that has been obtained, to an information processing server connected via a network;
a receiving unit configured to receive identification information of matching content from the information processing server, the matching content being content related to the broadcast program and of which viewing is to be completed by a start time of the broadcast program; and
a drawing unit configured to draw a user screen for displaying the identification information of the matching content and the program guide on the same screen.

7. The program receiving terminal according to Claim 6,
wherein said receiving unit is configured to receive, as the matching content, the related content of which the viewing is to be completed by a start time of the broadcast program.

8. The program receiving terminal according to Claim 6, further comprising
an output unit configured to output a warning, while the matching content is being outputted, at a predetermined point in time before a start time of the broadcast program.

9. The program receiving terminal according to Claim 6, further comprising
an output unit configured to output, while the matching content is being outputted, the broadcast program when a start time of the broadcast program has come.

10. (Amended) A program-related information providing method for providing a program receiving terminal with identification information that is information for identifying content on a network, said program-related information providing method comprising:
searching out related content related to a broadcast program, the related content being included in the content on the network;
determining matching content that is content of which viewing is to be completed by a start time of the broadcast programs, from among the related content searched out in said searching out; and
transmitting the identification information of the matching content to the program receiving terminal.

11. (Amended) A computer program for providing a program receiving terminal with identification information for identifying content on a network, said computer program causing a computer to execute:
searching out related content related to a broadcast program, the related content being included in the content on the network;
determining matching content that is content of which viewing is to be completed by a start time of the broadcast program, from among the related content searched out in the searching out; and
transmitting the identification information of the matching content to the program receiving terminal.

12. (Amended) A program-related information drawing method for drawing a program guide for broadcast programs and information on a broadcast program included in the program guide, said program-related information drawing method comprising:
obtaining the broadcast program included in the program guide, and transmitting information for identifying the broadcast program that has been obtained, to an information processing server connected via a network;
receiving, when considering that content related to the broadcast program is related content, identification information of matching content from the information processing server, the matching content being the related content of which viewing is to be completed by a start time of the broadcast program; and
drawing a user screen for displaying the identification information of the matching content and the program guide on the same screen.

13. (Amended) A computer program for drawing a program guide for broadcast programs and information on a broadcast program included in the program guide, said computer program causing a computer to execute:
obtaining the broadcast program included in the program guide, and transmitting information for identifying the broadcast program that has been obtained, to an information processing server connected via a network;
receiving, when considering that content related to the broadcast program is related content, identification information of matching content from the information processing server, the matching content being the related content of which viewing is to be completed by a start time of the broadcast program; and
drawing a user screen for displaying the identification information of the matching content and the program guide on the same screen.

14. (New) An information processing server which transmits information to a program receiving terminal which receives a broadcast program, said information processing server comprising:
a related content search unit configured to search out related content related to a broadcast program, from among content held by a device connected to said information processing server via a network;
a matching content determination unit configured to determine matching content that is content of which viewing is to be completed by a start time of the broadcast program, the matching content being included in the related content searched out by said related content search unit; and
a transmitting unit configured to transmit identification information for identifying the matching content, to said program receiving terminal.
